# DEMANDE DE BREVET EUROPEEN

(11) **EP 0 747 533 A1**
(43) Date de publication de la demande: **11.12.1996**
(21) Numéro de dépôt: 96401232.2
(22) Date de dépôt: 07.06.1996
(51) Int. Cl.: E01C 23/16, E01C 23/20, G01G 19/30

(54) **Dispositif de contrôle du dosage d'au moins un des constituants entrant dans la composition d'un produit de marquage routier**

(30) Priorité: 09.06.1995 FR 9507039
(71) Demandeur: Société GSR, 49070 Angers (FR)
(72) Inventeur: Mayadoux, Georges, 49000 Angers (FR); Camus, Bernard, 01600 Reyrieux (FR)
(74) Mandataire: Phélip, Bruno

(57) **Abrégé**

Le dispositif de contrôle du dosage d'au moins un des constituants (microbilles de verre par exemple) entrant dans la composition d'un produit de marquage routier est constitué :
- d'un système de pesée (3) du constituant de marquage utilisé,
- d'un dispositif de mesure (5, 6) de la longueur de marquage réalisée et,
- de moyens électroniques et informatiques de calcul (1) et d'affichage (2) du dosage de constituant de marquage déposé sur la route, lesquels moyens tiennent compte du paramètre de poids de constituant effectivement utilisé, d'une part, et des paramètres de longueur et de largeur de marquage réalisé, d'autre part.

## Description

La présente invention concerne un dispositif qui permet le contrôle du dosage d'au moins un des constituants entrant dans la composition d'un produit de marquage routier, pour la réalisation de bandes d'axe ou de rives, par exemple. Ce dispositif est particulièrement adapté pour contrôler le dosage des microbilles de verre qui sont injectées dans la peinture en cours d'apposition ou qui sont déposées sur la bande de peinture avant séchage.

Il est connu d'utiliser des microbilles de verre, en association avec une peinture pour former un produit de marquage routier rétroréfléchissant.
Les microbilles de verre et la peinture sont stockées dans des réservoirs indépendants embarqués sur la machine de dépose. Ces réservoirs, éventuellement sous pression, sont connectés à des buses d'injection que l'on choisit, notamment, en fonction de la largeur de travail désirée.

Le dosage du produit de marquage déposé sur la route est déterminé par le maître d'oeuvre et le conducteur de la machine doit s'efforcer de s'en rapprocher du mieux possible.

Actuellement, le dosage des microbilles de verre déposées sur la route est simplement déterminé à posteriori, en évaluant la quantité de microbilles utilisées, rapportée à la surface de marquage réalisée. En fonction de cette mesure, et pour les travaux ultérieurs l'opérateur adapte la pression d'injection et/ou la vitesse de la machine de marquage.

Il n'existe pas, à ce jour, de système de contrôle direct et en temps réel du dosage des microbilles de verre dans le domaine du marquage routier.

La présente invention propose un dispositif de contrôle du dosage d'au moins un des constituants entrant dans la composition d'un produit de marquage routier déposé par une machine au moyen de buses, en particulier pour la réalisation des bandes d'axe ou de rives.
Conformément à l'invention, ce dispositif comporte:
- un système de pesée du constituant de marquage utilisé,
- un dispositif de mesure de la longueur de marquage réalisée et,
- des moyens électroniques et informatiques de calcul et d'affichage du dosage de constituant de marquage déposé sur la route, lesquels moyens tiennent compte du paramètre de poids effectivement utilisé, d'une part, et des paramètres de longueur et de largeur du marquage réalisé, d'autre part.

Le poids de constituant utilisé pendant un certain laps de temps, rapporté à la surface marquée pendant le même laps de temps donne le dosage de constituant déposé par la machine.

Le calcul de ce dosage est réalisé régulièrement (toutes les 10 secondes à 2 mn par exemple). Il est affiché au niveau du poste de commande, ce qui permet à l'opérateur d'adapter pratiquement immédiatement la pression d'injection du constituant correspondant, ou la vitesse d'avancement de la machine de marquage, pour se rapprocher des valeurs de consigne déterminées par le maître d'oeuvre.

Selon un premier mode de réalisation, le système de pesée consiste en une ou plusieurs jauges de contrainte (ou équivalents) disposées sous le réservoir du constituant dont on désire contrôler le dosage.

Dans ce cadre, les moyens de pesée sont avantageusement associés à des moyens de solidarisation entre le réservoir et le châssis de la machine. Ces moyens de pesée et de solidarisation sont adaptés pour que le réservoir puisse soit reposer librement sur les moyens de pesée, pour la mesure du poids de constituant, soit être fermement solidarisé avec le châssis de la machine.
Selon une forme de réalisation particulièrement avantageuse, chaque système de pesée/solidarisation est constitué d'un vérin dont le corps fixe est solidarisé avec le châssis de la machine et dont la tige du piston mobile supporte les moyens de pesée et les moyens de verrouillage entre le réservoir et le châssis de la machine. la tige de piston peut avantageusement être munie d'une butée de verrouillage et d'une extension intégrant les moyens de pesée ; le mouvement du piston, dans un sens ou dans l'autre, est commandé pour activer soit la pesée, soit le verrouillage.

Selon une forme de réalisation particulière, l'extrémité de la tige du vérin traverse une embase solidaire du fond du réservoir ou de l'un de ses pieds, et cette extrémité reçoit un système d'écrous formant butée de verrouillage, destinée, par le mouvement descendant du piston, à venir plaquer ladite embase sur une entretoise solidaire du châssis de la machine. D'autre part, la tige du vérin comporte un support de jauge(s) de contrainte disposé sous ladite embase pour permettre le contact desdites jauges avec cette embase, en vue de la pesée du réservoir, par le mouvement remontant du piston.

Selon une autre caractéristique, un moyen de rappel élastique, type rondelle belleville, est interposé entre le piston et le corps de vérin, pour obtenir un verrouillage élastique du réservoir sur le châssis de la machine.

Selon une autre forme de réalisation, le système de pesée comprend une jauge, type capteur de pression statique, disposée dans le réservoir du constituant dont on désire contrôler le dosage, au niveau de son fond, et agencée pour mesurer le poids de la colonne de produit qu'elle supporte. Dans ce cas, la jauge est de préférence disposée dans la partie centrale du réservoir.

Le dispositif de contrôle de dosage selon l'invention tient compte directement du poids de constituant utilisé ; il est de ce fait très précis et très fiable.
En outre, il ne nécessite qu'un entretien minimum et, une fois réglé, il n'est pas nécessaire de le réétalonner régulièrement.

L'invention sera encore illustrée, sans être aucunement limitée, par la description suivante de différents modes de réalisation particuliers, donnés à titre d'exemples et représentés sur les dessins annexés dans lequels :
- la figure 1 est un schéma synoptique montrant la configuration générale du dispositif de contrôle selon l'invention ;
- la figure 2 est une représentation schématique d'une forme de réalisation possible du système de pesée faisant partie intégrante du dispositif de contrôle selon l'invention ;
- la figure 3 est une vue en demi-coupe d'une forme de réalisation possible d'un système de pesée/solidarisation servant d'interface entre le réservoir de constituant et le châssis de la machine;
- la figure 4 est une vue schématique, en coupe, montrant une autre forme de réalisation du système de pesée, constitué d'une jauge placée à l'intérieur du réservoir de constituant.

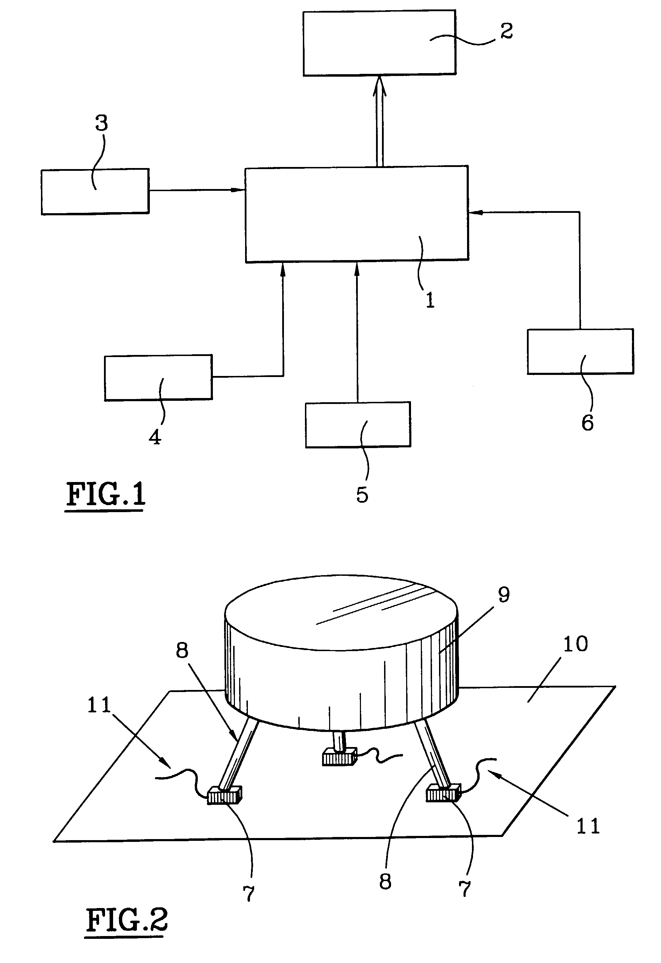

Tel que représenté sur la figure 1, le dispositif de contrôle selon l'invention est constitué d'un calculateur 1 qui reçoit un ensemble d'informations aptes à lui permettre de déterminer le dosage du constituant de marquage que l'on désire contrôler. Le calcul résultant est transmis à une unité d'affichage 2 disposée à proximité de l'opérateur, par exemple dans le poste de conduite de la machine de marquage.

Les informations transmises au calculateur 1 sont: - le poids du constituant de marquage, - la largeur du marquage réalisé, - le nombre de marquages réalisés et leur longueur respective, ainsi que - la distance parcourue par la machine.

Le système de pesée 3 du constituant de marquage dont on désire contrôler le dosage consiste en un ou plusieurs capteurs, type jauge(s) de contrainte ou capteur(s) de pression statique par exemple, adaptés sur la machine de marquage, au niveau du réservoir du constituant de marquage, pour déterminer le poids global stocké ou une fraction représentative de ce poids.
Le modèle de capteur utilisé (notamment sa résolution) est fonction de la capacité du réservoir et de la fréquence de calcul et d'affichage.
Le ou les capteur(s) sont directement connectés au calculateur 1.

La largeur de marquage est déterminée par le choix de la buse d'injection. Ce paramètre est intégré dans le calculateur par l'opérateur au moyen d'un dispositif 4 du type à choix multiples, par exemple.

Au niveau de la buse d'injection, des capteurs adaptés 5 permettent la prise en compte du nombre de traits de marquage réalisés et de leur longueur respective.

Enfin, un dispositif de mesure, type codeur incrémental 6 adapté sur la roue du véhicule permet la prise en compte de la distance parcourue.

Le dispositif selon l'invention permet à l'opérateur présent dans le poste de conduite de la machine de contrôler régulièrement le dosage de l'un des constituants entrant dans la composition du produit de marquage. Le calcul correspondant peut être réalisé et affiché dans le poste de conduite selon un rythme prévu à l'avance, compris entre 10 secondes et 2 minutes par exemple.
Pendant le laps de temps déterminé, le calculateur 1 définit le poids de produit utilisé, grâce aux paramètres fournis par les moyens de pesée, ainsi que la surface de marquage réalisée (largeur x la longueur de bande); on obtient le dosage du constituant en question qui est affiché pour renseigner l'opérateur sur la conduite simultanée à tenir afin d'approcher la valeur de consigne déterminée par le maître d'oeuvre.

Cette mesure directe du poids de constituant consommé dans le réservoir pour réaliser une surface déterminée de marquage constitue une méthode de contrôle de dosage très précise et très fiable.

Tel qu'on l'a représenté sur la figure 2, le système de pesée 3 du constituant de marquage utilisé peut consister en un ensemble de jauges de contrainte disposées sous le réservoir. Dans cet exemple de réalisation, trois jauges de contrainte, repérées 7, sont disposées sous les pieds 8 du réservoir 9 qui est installé sur le châssis 10 de la machine. Sur la figure 2, on remarque également les câbles 11 qui réalisent la connexion entre les jauges de contrainte 7 et le calculateur 1.
Ce type de montage nécessite une installation particulière du réservoir 9 sur le châssis 10 de la machine de marquage, de telle sorte que le réservoir puisse soit reposer librement sur des jauges de contrainte pour effectuer la mesure du poids de constituant, soit être fermement solidarisé avec le châssis 10, en dehors des périodes de mesure.

En particulier, le réservoir peut avantageusement être désolidarisé du châssis à chaque mesure lorsque la machine de marquage fonctionne, et être reverrouillé après la prise de la mesure. A titre indicatif, en fonction du matériel utilisé, on peut prévoir une mesure toutes les minutes, chaque mesure s'étendant sur un laps de temps de l'ordre de trois secondes pour recueillir une dizaine de valeurs.

Le verrouillage du réservoir sur le châssis de la machine est prévu suffisamment ferme pour éviter tout risque de désolidarisation, notamment au cours des déplacements ou des manoeuvres.

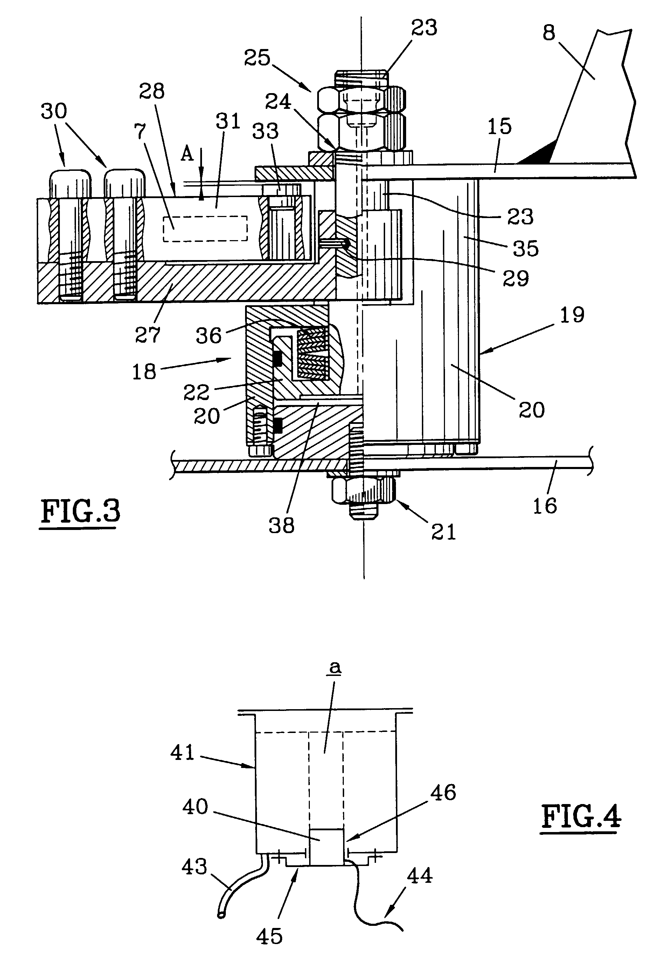

Une forme de réalisation particulière d'une telle installation est représentée sur la figure 3.

Sur cette figure, on remarque l'embase horizontale 15 solidaire de l'un des pieds 8 du réservoir 9, et, en partie inférieure, un élément 16 du châssis 10 de la machine. Entre l'embase 15 et l'élément de châssis 16, on trouve un système de pesée/solidarisation 18 qui va maintenant être décrit plus en détail.

A noter que chaque pied 8 du réservoir 9 est équipé d'un système identique ou similaire.

Le système de pesée/solidarisation 18 est constitué d'un vérin hydraulique 19 dont le corps 20 est solidarisé avec l'élément de châssis 16 par boulonnage 21, et dont le piston 22 porte une tige mobile saillante 23 qui s'étend en direction de l'embase 15.
Les caractéristiques du vérin hydraulique 19 sont fonction de l'application envisagée, et en particulier du poids du réservoir 9 et du nombre de ses pieds.

La tige mobile 23 s'étend à travers un orifice 24 de l'embase 15 et elle porte à son extrémité un système à double écrous 25 destiné à servir de butée de verrouillage.

Sous l'embase 15, la tige saillante 23 porte une extension 27 formant support pour un capteur de pesée 28. L'extension 27 est solidaire de la tige 23 par l'intermédiaire d'une vis d'ancrage 29 ; le capteur de pesée 28 est monté sur le support 27 au moyen d'un jeu de vis 30.

Le capteur 28 se présente sous la forme d'un barreau 31 déformable élastiquement, qui intègre l'organe de pesée en forme de jauge de contrainte 7. Il comporte une pièce d'extrémité 33, en forme de pastille, destinée à servir de surface d'appui et de contact sous l'embase 15.

La position verrouillée du système de pesée/solidarisation 18 est obtenue lorsque le piston 22 du vérin hydraulique 19 se situe en position basse. La tige 23 du vérin tire sur la butée 25 pour entraîner l'embase 15 vers le châssis 16. Le contact et le verrouillage entre les deux pièces 15 et 16 s'effectue par l'intermédiaire d'une entretoise 35 qui peut être constituée, comme illustré sur la figure 3, par le corps de vérin 20 conformé en conséquence.

Ce verrouillage de l'embase 15 sur l'élément de châssis 16 peut être de type élastique par interposition d'une rondelle belleville 36, ou équivalent, entre le corps de vérin 20 et le piston 22. Là encore, les caractéristiques de la rondelle belleville utilisée sont fonction de l'application envisagée et de la force de verrouillage désirée.

Dans cette position verrouillée, un léger jeu A de l'ordre du mm par exemple, subsiste entre l'embase 15 et la pastille 33.

La pesée du réservoir 9, lors des opérations de marquage, est obtenue par soulèvement du piston 22 et extraction de la tige de vérin 23. Ce soulèvement est réalisé de façon à ce que le poids ou une partie du poids du réservoir 9 soit supporté par le capteur 28, et il est réalisé par envoi d'huile dans la chambre de vérin 38, par l'intermédiaire d'un circuit hydraulique non représenté. Cette mise en pression du piston 22 est adaptée pour contrer l'effort de rappel de la rondelle belleville 36.

Dans cette position "pesée", le jeu A est reporté entre l'embase 15 et la butée 25.

Les données de poids enregistrées par la jauge de contrainte 7 sont transmises au calculateur 1 et traitées, notamment en fonction du nombre de capteurs, pour assurer l'affichage du dosage de constituant utilisé.

On a représenté sur la figure 4, un autre mode de réalisation possible du système de pesée. Ce système particulier consiste à placer une jauge 40, type capteur de pression statique, à l'intérieur et au fond du réservoir 41 de façon à mesurer le poids de la colonne a de constituant qui est située au-dessus de sa surface. On mesure ainsi une fraction seulement du poids du constituant stocké, mais le niveau supérieur du constituant étant toujours sensiblement horizontal, l'évolution du poids de cette fraction est proportionnelle à l'évolution du poids total stocké. On mesure la pression statique du constituant, donc son poids.
La jauge de contrainte 40 est de préférence disposée dans la partie centrale du réservoir 41 afin d'enregistrer les plus faibles amplitudes du niveau de constituant indépendantes de l'utilisation, par exemple liées à la position de la machine de marquage sur le sol.

Sur la figure 4, on remarque la tuyère 43 qui s'étend à partir du fond du réservoir 41 et qui dirige les produits vers la buse de dépose au sol. On remarque encore que le capteur 40, associé à son câble 44 d'alimentation et de transmission des données, est positionné sur une platine 45 fixée de façon étanche sous le fond du réservoir 41; le capteur 40 s'étend à l'intérieur du réservoir 41 par l'intermédiaire d'un orifice central 46.

Plusieurs dispositifs du même type peuvent être utilisés pour contrôler le dosage de différents constituants entrant dans la composition du produit de marquage. Ainsi, des dispositifs identiques ou similaires à ceux qui viennent d'être décrits pourront être utilisés pour connaître le dosage - des microbilles injectées dans la peinture de marquage, - des microbilles de saupoudrage destinées à être simplement déposées sur la peinture, - ou de la peinture elle-même. Ce principe est également valable pour le contrôle du dosage de tout autre liquide, tels les produits thermoplastiques, ou de tout autre solide, genre granulats par exemple, stockés dans des réservoirs de toute nature.

## Revendications

1. Dispositif de contrôle du dosage d'au moins un des constituants entrant dans la composition d'un produit de marquage routier déposé par une machine au moyen de buses, pour la réalisation de bandes d'axe ou de rives par exemple, caractérisé en ce qu'il comporte:
- un système de pesée (3) du constituant de marquage utilisé,
- un dispositif de mesure (5, 6) de la longueur de marquage réalisée et,
- des moyens électroniques et informatiques de calcul (1) et d'affichage (2) du dosage de constituant de marquage déposé sur la route, lesquels moyens tiennent compte du paramètre de poids effectivement utilisé, d'une part, et des paramètres de longueur et de largeur du marquage réalisé, d'autre part.

2. Dispositif de contrôle selon la revendication 1, caractérisé en ce qu'il comporte un système de pesée (3) disposé sous le réservoir (9) du constituant dont on désire contrôler le dosage.

3. Dispositif de contrôle selon la revendication 2, caractérisé en ce qu'il comporte des moyens de pesée (7) interposés entre le réservoir (9) et le châssis (10) de la machine, et en particulier sous chacun des pieds (8) dudit réservoir (9), lesquels moyens de pesée (7) sont associés à des moyens de solidarisation (23, 25) entre ledit réservoir (9) et ledit châssis (10), lesquels moyens de pesée et de solidarisation sont adaptés pour que le réservoir (9) puisse, soit reposer librement sur les moyens de pesée pour effectuer la mesure du poids de constituant, soit être fermement solidarisé avec le châssis (10) de la machine.

4. Dispositif de contrôle selon la revendication 3, caractérisé en ce que chaque système de pesée/solidarisation (18) est constitué d'un vérin (19) dont le corps fixe (20) est solidarisé avec le châssis (10) de la machine et dont la tige mobile (23) supporte les moyens de pesée (7) et les moyens de verrouillage (25) entre le réservoir (9) et le châssis (10).

5. Dispositif de contrôle selon la revendication 4, caractérisé en ce que le système de pesée/solidarisation (18) est constitué d'un vérin (19) dont la tige (23) est munie d'une butée de verrouillage (25) et d'une extension (27) intégrant les moyens de pesée (7), le mouvement du piston (22), dans un sens ou dans l'autre, étant commandé pour activer soit la pesée, soit le verrouillage.

6. Dispositif de contrôle selon la revendication 5, caractérisé en ce que l'extrémité de la tige (23) du vérin (19) traverse une embase (15) solidaire du fond du réservoir (9) ou de l'un de ses pieds (8), ladite extrémité recevant un système d'écrous (25) formant butée de verrouillage destinée, par le mouvement descendant du piston (22), à venir plaquer ladite embase (15) sur une entretoise (35) solidaire du châssis (10) de la machine, et en ce que la tige (23) du piston (22) comporte un support (27) de jauge de contrainte (7), disposé sous ladite embase (15) pour permettre le contact de ladite jauge (7) avec cette embase (15), en vue de la pesée du réservoir (9), par le mouvement remontant du piston (22).

7. Dispositif de contrôle selon l'une quelconque des revendications 4 à 6, caractérisé en ce qu'un moyen de rappel élastique type rondelle belleville (36) est interposé entre le piston (22) et le corps de vérin (20), pour obtenir un verrouillage élastique du réservoir (9) sur le châssis (10) de la machine.

8. Dispositif de contrôle selon la revendication 1, caractérisé en ce que le système de pesée consiste en une jauge (40) disposée dans la partie centrale du réservoir (41) du constituant dont on désire contrôler le dosage, au niveau de son fond, et agencée pour mesurer le poids de la colonne a de produit située sur sa surface.

9. Dispositif de contrôle selon la revendication 8, caractérisé en ce que la jauge (40) est du type capteur de pression statique.
